# FASCICULE DE BREVET EUROPEEN

(11) **EP 3 887 119 B1**
(45) Date de publication et mention de la délivrance du brevet: **23.08.2023**
(21) Numéro de dépôt: 19805290.4
(22) Date de dépôt: 19.11.2019
(51) Int. Cl.: B29C 44/12, B29C 44/14

(54) **PROCÉDÉ DE RÉALISATION D'UNE MATELASSURE DE SIÈGE DE VÉHICULE AUTOMOBILE**
VERFAHREN ZUR HERSTELLUNG EINER KRAFTFAHRZEUGSITZPOLSTERUNG
PROCESS FOR PRODUCING MOTOR VEHICLE SEAT CUSHIONING

(30) Priorité: 26.11.2018 FR 1871855
(43) Date de publication de la demande: 06.10.2021
(73) Titulaire: TESCA France, 92977 Paris La Défense Cedex (FR)
(72) Inventeur: GEORGES, Laurent, 08190 Roizy (FR)
(74) Mandataire: Sayettat, Julien Christian
(86) Numéro de dépôt international: PCT/EP2019/081726
(87) Numéro de publication internationale: WO 2020/109069

(56) Documents cités:
- EP-A2- 0 463 981
- WO-A1-2018/020149
- DE-A1-102004 027 079
- FR-A1- 2 868 982

## Description

L'invention concerne un procédé de réalisation d'une matelassure de siège de véhicule automobile.

Il est connu, notamment du document WO-2018/020149-A1, de mettre en oeuvre un procédé de réalisation d'une matelassure de siège de véhicule automobile, ledit procédé comprenant les étapes suivantes :
- prévoir une coiffe comprenant un format d'un complexe comprenant une couche de matériau de revêtement et une sous-couche de mousse élastiquement compressible,

mettre en place ledit format dans un moule définissant une cavité de moulage, ladite couche de revêtement étant disposée contre la paroi de ladite cavité, disposer sur ladite sous-couche un film à base de polyuréthane thermoplastique,
injecter dans ladite cavité un mélange précurseur de mousse élastiquement compressible, de manière à réaliser un bloc de rembourrage, ledit film ayant un point de fusion et un indice de fluidité en masse tels qu'il se dégrade sous l'action de la chaleur dégagée lors de la formation de la mousse dudit bloc, afin de permettre un surmoulage de ladite sous-couche par ledit bloc sensiblement sans pénétration de la mousse dudit bloc dans l'épaisseur de ladite sous-couche,
après expansion de la mousse, démouler la matelassure obtenue.

Avec un tel procédé, on réalise une matelassure dont la coiffe est solidaire, au moins par le biais du format, du bloc de rembourrage, ce qui évite d'avoir à utiliser des moyens de rappel tels qu'utilisés traditionnellement dans le cas de coiffes montées par chaussage sur ledit bloc.

En outre, le film s'est dégradé sous l'action de la chaleur dégagée lors de la formation de la mousse du bloc, afin de permettre un surmoulage de la sous-couche par ledit bloc.

Et, de par un choix pertinent de la température de fusion et de la fluidité à l'état fondu du film, cette opération de surmoulage se fait sensiblement sans pénétration de la mousse du bloc dans l'épaisseur de la sous-couche.

En effet, le film se dégrade de façon progressive sous l'action de la chaleur, ce qui permet que la mousse en formation vienne en contact avec la sous-couche une fois qu'elle a pris, du fait de sa réticulation partielle, une consistance telle que sa pénétration au sein de ladite sous-couche est minimisée.

Il en résulte l'absence de croûte étanche, nuisant au confort hygrothermique de la matelassure, qui aurait été liée à une pénétration de mousse au sein de la sous-couche.

Cependant, un film tel que préconisé s'avère dans certains cas insuffisamment robuste.

C'est notamment le cas lorsque la coiffe présente une géométrie complexe, obligeant le film à subir des déformations importantes, qui risque de mener à une dégradation prématurée dudit film, notamment par perçage localisé, ce qui peut conduire à un surmoulage de la sous-couche alors que la mousse en formation se présente encore sous une forme trop liquide, susceptible de pénétrer de façon importante dans ladite sous-couche.

C'est également le cas lorsque la matelassure doit présenter une portance élevée - par exemple dans le cas d'une matelassure d'assise - qui oblige à réaliser un remplissage accentué du moule en mélange précurseur de mousse, ce qui se traduit par une pression accentuée dans la cavité de moulage pouvant conduire au phénomène de dégradation prématurée du film sus-évoquée.

Dans de tels cas, on observe une dégradation trop rapide du film, ce qui empêche la montée en pression de la mousse dans le moule quand elle arrive à la fin de son temps de montée et risque de conduire à des défauts de surface de ladite mousse - se présentant sous la forme de cratères (ou « collapses ») - entrainant une dégradation des propriétés de confort et/ou d'aspect de la matelassure.

Et ce phénomène est accentué lorsqu'est prévu une aspiration sous vide destinée à plaquer la coiffe contre la paroi du moule, technique appliquée notamment lorsque ladite coiffe présente une géométrie complexe, par exemple de par la présence de tranchées d'enjolivement.

L'invention a pour but de pallier cet inconvénient.

A cet effet, et selon un premier aspect, l'invention propose un procédé de réalisation d'une matelassure de siège de véhicule automobile, ledit procédé comprenant les étapes suivantes :
- prévoir une coiffe comprenant un format d'un complexe comprenant une couche de matériau de revêtement et une sous-couche de mousse élastiquement compressible,
- mettre en place ledit format dans un moule définissant une cavité de moulage, ladite couche de revêtement étant disposée contre la paroi de ladite cavité,
- disposer sur ladite sous-couche un film à base de polyuréthane thermoplastique,
- injecter dans ladite cavité un mélange précurseur de mousse élastiquement compressible, de manière à réaliser un bloc de rembourrage, ledit film ayant un point de fusion et un indice de fluidité en masse tels qu'il se dégrade sous l'action de la chaleur dégagée lors de la formation de la mousse dudit bloc, afin de permettre un surmoulage de ladite sous-couche par ledit bloc sensiblement sans pénétration de la mousse dudit bloc dans l'épaisseur de ladite sous-couche,
- après expansion de la mousse, démouler la matelassure obtenue,
ledit film étant pourvu d'une pellicule de renfort tournée vers ladite cavité, de manière à former une barrière bicouche d'entrave à la pénétration de mousse, ladite pellicule étant à base de polyuréthane thermoplastique de point de fusion supérieur à celui dudit film et d'indice de fluidité en masse inférieur à celui dudit film, de manière à présenter une résistance accentuée par rapport audit film pour se dégrader de façon retardée sous l'action de ladite chaleur.

La pellicule de renfort présente des propriétés physiques proches de celles du film, mais elle est légèrement plus résistante à la chaleur et d'une fluidité légèrement plus basse, ce qui permet de conférer à la barrière d'entrave une robustesse accrue permettant sa dégradation retardée.

Ainsi, la pression dans le moule peut être maintenue de façon prolongée - par exemple de l'ordre de 10 à 15 secondes en plus -, ce qui permet de stabiliser la mousse à la fin du temps de montée et d'éviter la formation de cratères en sa surface.

On aurait pu prévoir de n'utiliser que la pellicule sans le film mais la demanderesse a observé, suite à de nombreux essais, que ladite pellicule présente un pouvoir collant moindre que ledit film, ce qui ne permet pas de garantir une cohésion suffisante entre la sous-couche et le bloc à l'issue du surmoulage.

C'est pourquoi est mis en oeuvre un film pourvu d'une telle pellicule remplissant une fonction principale de renfort alors que ledit film présente pour sa part une fonction principale de collage.

En définitive, on dispose avec l'agencement proposé d'un procédé de fabrication particulièrement fiable, permettant en outre, notamment dans le cas de matelassures dont la coiffe présente une géométrie complexe, la mise en oeuvre d'un placage par aspiration sous vide de ladite coiffe contre la paroi de la cavité sans risque de dégradation prématurée de la barrière bicouche.

D'autres particularités et avantages de l'invention apparaîtront dans la description qui suit, faite en référence aux figures jointes, dans lesquelles :

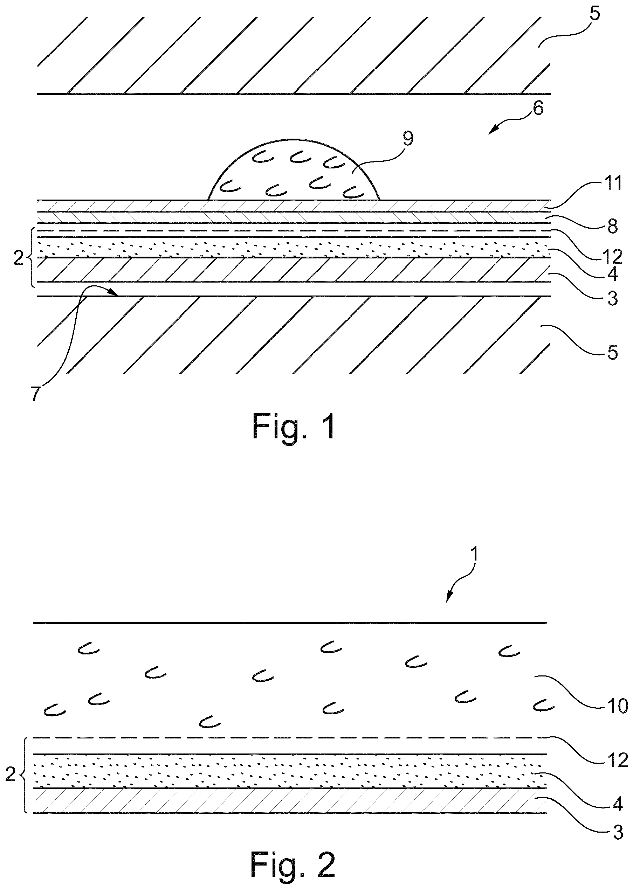

[Fig. 1] est une vue schématique en coupe partielle d'une matelassure en cours de fabrication selon une réalisation, le mélange précurseur de mousse venant d'être injecté dans le moule,
[Fig. 2] est une vue schématique en coupe partielle de la matelassure de la figure 1 une fois réalisée.

En référence aux figures, on décrit un procédé de réalisation d'une matelassure 1 de siège de véhicule automobile, ledit procédé comprenant les étapes suivantes :
- prévoir une coiffe comprenant un format 2 d'un complexe comprenant une couche de matériau de revêtement 3 et une sous-couche 4 de mousse élastiquement compressible,
- mettre en place ledit format dans un moule 5 définissant une cavité de moulage 6, ladite couche de revêtement étant disposée contre la paroi 7 de ladite cavité,
- disposer sur ladite sous-couche un film 8 à base de polyuréthane thermoplastique,
- injecter dans ladite cavité un mélange précurseur de mousse 9 élastiquement compressible, de manière à réaliser un bloc 10 de rembourrage, ledit film ayant un point de fusion et un indice de fluidité en masse tels qu'il se dégrade sous l'action de la chaleur dégagée lors de la formation de la mousse dudit bloc, afin de permettre un surmoulage de ladite sous-couche par ledit bloc sensiblement sans pénétration de la mousse dudit bloc dans l'épaisseur de ladite sous-couche,
- après expansion de la mousse, démouler la matelassure 1 obtenue,
ledit film étant pourvu d'une pellicule de renfort 11 tournée vers ladite cavité, de manière à former une barrière bicouche d'entrave à la pénétration de mousse, ladite pellicule étant à base de polyuréthane thermoplastique de point de fusion supérieur à celui dudit film et d'indice de fluidité en masse inférieur à celui dudit film, de manière à présenter une résistance accentuée par rapport audit film pour se dégrader de façon retardée sous l'action de ladite chaleur.

Les indices de fluidité en masse sont notamment mesurés selon la norme NF T 51-016 en vigueur à la date de dépôt de la demande, à 190°C avec un rhéomètre capillaire à écoulement forcé dont le piston est chargé avec une masse de 2,160 kg.

Les points de fusion sont mesurés notamment en analyse calorimétrie différentielle à balayage (DSC), selon la norme ISO 11357 en vigueur à la date de dépôt de la demande.

Selon une réalisation :
- le film 8 a un point de fusion compris entre 45 et 52°C et un indice de fluidité en masse compris entre 17 et 26 g/10 min,
- la pellicule 11 a un point de fusion compris entre 53 et 60°C et un indice de fluidité en masse compris entre 6 et 16 g/10 min.

Plus particulièrement, selon une réalisation :
- le film 8 a un point de fusion compris entre 48 et 52°C et un indice de fluidité en masse compris entre 22 et 26 g/10 min,
- la pellicule 11 a un point de fusion compris entre 53 et 57°C et un indice de fluidité en masse compris entre 12 et 16 g/10 min.

De nombreux essais ont permis à la demanderesse d'observer d'excellents résultats avec un film 8 et une pellicule 11 présentant de telles caractéristiques.

Selon une réalisation, le film 8 et la pellicule 11 présentent chacun une épaisseur comprise entre 7 et 20 microns.

Selon une réalisation, le polyol utilisé pour réaliser le film 8 est à base de polyester.

Selon une réalisation, le polyol utilisé pour réaliser la pellicule 11 est à base de polyester.

Selon une réalisation, l'isocyanate utilisé pour réaliser le film 8 comprend un groupe aromatique.

Selon une réalisation, l'isocyanate utilisé pour réaliser la pellicule 11 comprend un groupe aromatique.

Selon une réalisation, la sous-couche de mousse 4 présente une densité de 0,028±0,002, ce qui correspond usuellement à une qualité médiocre de mousse utilisée pour des coiffes associées à un bloc de rembourrage par chaussage et non par surmoulage de ladite coiffe par ledit bloc.

L'emploi d'une telle sous-couche 4, de faible coût, permet de réaliser une matelassure 1 de coût minimisé.

L'emploi d'une telle sous-couche 4 est rendue possible par l'utilisation du film 8 pourvu de la pellicule 11 tel que sus-décrit.

Selon une réalisation, la sous-couche de mousse 4 est à base de polyuréthanne.

Selon une réalisation, la sous-couche de mousse 4 présente une épaisseur comprise entre 1,5 et 2 mm.

Selon la réalisation représentée, la sous-couche de mousse 4 est pourvue, sur sa face externe, d'un voile de protection 12, notamment en maille rectiligne ou circulaire.

Selon une réalisation non représentée, la coiffe comprend un deuxième format associé bord à bord, notamment par couture, au premier format 2, ledit deuxième format étant non surmoulé par le bloc 10 de rembourrage.

Selon une réalisation, le deuxième format est situé en partie latérale de la matelassure 1, sa dissociation du bloc 10 de rembourrage permettant une meilleure résistance dudit bloc en regard des flexions qu'il subit lors des entrées/sorties des passagers dans le/hors du véhicule.

Selon une réalisation, la mousse du bloc 10 présente une densité différente selon qu'elle est située en regard du premier 2 ou deuxième format, ladite mousse présentant notamment une densité accrue en parties latérales de la matelassure 1, de manière à permettre un maintien latéral ferme du passager.

On décrit à présent une matelassure 1 de siège de véhicule automobile réalisée par un tel procédé, ladite matelassure comprenant :
- une coiffe comprenant un premier format 2, ledit format comprenant une couche de matériau de revêtement 3 et une sous-couche de mousse 4 élastiquement compressible notamment à base de polyuréthanne,
- un bloc 10 de rembourrage en mousse élastiquement compressible, ledit bloc surmoulant ledit format en laissant ladite sous-couche sensiblement exempte de mousse dans son épaisseur.

On décrit enfin, de façon non représentée, un siège de véhicule automobile comprenant une telle matelassure 1, ladite matelassure étant associée, par la périphérie de la coiffe, à une armature dudit siège.

Pour réaliser l'association de la matelassure 1 sur l'armature de siège, on utilise notamment des profilés fixés, par exemple par couture, en périphérie de la coiffe, lesdits profilés s'emboitant dans des parties d'ancrage prévues sur ladite armature.

## Revendications

1. Procédé de réalisation d'une matelassure (1) de siège de véhicule automobile, ledit procédé comprenant les étapes suivantes :
- prévoir une coiffe comprenant un format (2) d'un complexe comprenant une couche de matériau de revêtement (3) et une sous-couche de mousse (4) élastiquement compressible,
- mettre en place ledit format dans un moule (5) définissant une cavité de moulage (6), ladite couche de revêtement étant disposée contre la paroi (7) de ladite cavité,
- disposer sur ladite sous-couche un film (8) à base de polyuréthane thermoplastique,
- injecter dans ladite cavité un mélange précurseur de mousse (9) élastiquement compressible, de manière à réaliser un bloc (10) de rembourrage, ledit film ayant un point de fusion et un indice de fluidité en masse tels qu'il se dégrade sous l'action de la chaleur dégagée lors de la formation de la mousse dudit bloc, afin de permettre un surmoulage de ladite sous-couche par ledit bloc sensiblement sans pénétration de la mousse dudit bloc dans l'épaisseur de ladite sous-couche,
- après expansion de la mousse, démouler la matelassure (1) obtenue,
ledit procédé étant **caractérisé en ce que** ledit film est pourvu d'une pellicule de renfort (11) tournée vers ladite cavité, de manière à former une barrière bicouche d'entrave à la pénétration de mousse, ladite pellicule étant à base de polyuréthane thermoplastique de point de fusion supérieur à celui dudit film et d'indice de fluidité en masse inférieur à celui dudit film, de manière à présenter une résistance accentuée par rapport audit film pour se dégrader de façon retardée sous l'action de ladite chaleur.

2. Procédé selon la revendication 1, **caractérisé en ce que** :
- le film (8) a un point de fusion compris entre 45 et 52°C et un indice de fluidité en masse compris entre 17 et 26 g/10 min,
- la pellicule (11) a un point de fusion compris entre 53 et 60°C et un indice de fluidité en masse compris entre 6 et 16 g/10 min.

3. Procédé selon la revendication 2, **caractérisé en ce que** :
- le film (8) a un point de fusion compris entre 48 et 52°C et un indice de fluidité en masse compris entre 22 et 26 g/10 min,
- la pellicule (11) a un point de fusion compris entre 53 et 57°C et un indice de fluidité en masse compris entre 12 et 16 g/10 min.

4. Procédé selon l'une quelconque des revendications 1 à 3, **caractérisé en ce que** le film (8) et la pellicule (11) présentent chacun une épaisseur comprise entre 7 et 20 microns.

5. Procédé selon l'une quelconque des revendications 1 à 4, **caractérisé en ce que** la sous-couche de mousse (4) présente une densité de 0,028±0,002.

## Patentansprüche

1. Verfahren zum Herstellen einer Polsterung (1) für einen Kraftfahrzeugsitz, wobei das Verfahren die folgenden Schritte umfasst:
- Bereitstellen eine Abdeckung, die eine Struktur (2) aus einem Komplex umfasst, der eine Schicht aus Überzugsmaterial (3) und eine Unterschicht aus elastisch komprimierbarem Schaumstoff (4) umfasst,
- Platzieren der Struktur in einer Form (5), die einen Formhohlraum (6) definiert, wobei die Überzugsschicht an der Wand (7) des Hohlraums angeordnet wird,
- Anordnen einer thermoplastischen Folie (8) auf Polyurethanbasis auf der Unterschicht,
- Einspritzen einer elastisch komprimierbaren Schaumvorläufermischung (9) in den Hohlraum, um einen Füllblock (10) herzustellen, wobei die Folie einen Schmelzpunkt und einen Schmelzflussindex aufweist, so dass sie sich unter Einwirkung der Wärme, die während des Bildens des Schaumstoffs des Blocks freigesetzt wird, abbaut, um ein Überformen der Unterschicht durch den Block im Wesentlichen ohne Eindringen des Schaumstoffs des Blocks in die Dicke der Unterschicht zu ermöglichen,
- nach dem Expandieren des Schaums, Entnehmen der erhaltenen Polsterung (1) aus der Form,
wobei das Verfahren **dadurch gekennzeichnet ist, dass** die Folie mit einem Verstärkungsfilm (11) versehen ist, der dem Hohlraum zugewandt ist, um eine zweischichtige Barriere zu bilden, die das Eindringen von Schaumstoff verhindert, wobei der Film auf thermoplastischem Polyurethan mit einem Schmelzpunkt, der höher als der der Folie, und einem Schmelzflussindex, der niedriger ist als der der Folie, basiert, um so im Vergleich zur Folie eine erhöhte Festigkeit aufweist, um unter Einwirkung der Wärme verzögert abgebaut zu werden.

2. Verfahren nach Anspruch 1, **dadurch gekennzeichnet, dass**:
- Die Folie (8) einen Schmelzpunkt zwischen 45 und 52 °C und einen Schmelzflussindex zwischen 17 und 26 g/10 min aufweist,
- der Film (11) einen Schmelzpunkt zwischen 53 und 60 °C und einen Schmelzflussindex zwischen 6 und 16 g/10 min aufweist.

3. Verfahren nach Anspruch 2, **dadurch gekennzeichnet, dass**:
- Die Folie (8) einen Schmelzpunkt zwischen 48 und 52 °C und einen Schmelzflussindex zwischen 22 und 26 g/10 min aufweist,
- der Film (11) einen Schmelzpunkt zwischen 53 und 57 °C und einen Schmelzflussindex zwischen 12 und 16 g/10 min aufweist.

4. Verfahren nach einem der Ansprüche 1 bis 3, **dadurch gekennzeichnet, dass** die Folie (8) und der Film (11) jeweils eine Dicke zwischen 7 und 20 Mikrometer aufweisen.

5. Verfahren nach einem der Ansprüche 1 bis 4, **dadurch gekennzeichnet, dass** die Unterschicht aus Schaumstoff (4) eine Dichte von 0,028 ± 0,002 aufweist.

## Claims

1. Process for producing motor vehicle seat cushioning (1), said method comprising the following steps:
- providing a cover comprising a format (2) of a complex comprising a layer of covering material (3) and a sublayer (4) of elastically compressible foam,
- setting said format in place within a mould (5) defining a moulding cavity (6), said covering layer being disposed against the wall (7) of said cavity,
- arranging a film (8) based on thermoplastic polyurethane over said sublayer,
- injecting an elastically compressible foam precursor mixture (9) into said cavity, so as to make a padding block (10), said film having a melting point and a melt mass-flow index such that it breaks down under the action of the heat released during the formation of the foam of said block, in order to enable overmoulding said sublayer by said block substantially without penetration of the foam of said block into the thickness of said sublayer,
- after expanding the foam, demoulding the obtained cushion (1),
said method being **characterised in that** said film is provided with a reinforcing sheet (11) directed towards said cavity, so as to form a two-layer barrier against the penetration of foam, said sheet being based on thermoplastic polyurethane with a melting point higher than that of said film and with a melt mass-flow index lower than that of said film, so as to have an increased resistance in comparison with said film in order to be broken down with a delay under the action of said heat.

2. The method according to claim 1, **characterised in that**:
- the film (8) has a melting point comprised between 45 and 52°C and a melt mass-flow index comprised between 17 and 26 g/10 min,
- the sheet (11) has a melting point comprised between 53 and 60°C and a melt mass-flow index comprised between 6 and 16 g/10 min.

3. The method according to claim 2, **characterised in that**:
- the film (8) has a melting point comprised between 48 and 52°C and a melt mass-flow index comprised between 22 and 26 g/10 min,
- the sheet (11) has a melting point comprised between 53 and 57°C and a melt mass-flow index comprised between 12 and 16 g/10 min.

4. The method according to any one of claims 1 to 3, **characterised in that** each of the film (8) and the sheet (11) has a thickness comprised between 7 and 20 microns.

5. The method according to any one of claims 1 to 4, **characterised in that** the foam sublayer (4) has a density of 0.028±0.002.
